# EUROPEAN PATENT SPECIFICATION

(11) **EP 3 319 820 B1**
(45) Date of publication and mention of the grant of the patent: **12.06.2019**
(21) Application number: 16759857.2
(22) Date of filing: 07.07.2016
(51) Int. Cl.: B60C 25/138, B60C 25/05

(54) **A TIRE DEMOUNTING DEVICE**
REIFENDEMONTIEREINHEIT
APPAREIL POUR LE DEMONTAGE DE PNEUS

(30) Priority: 10.07.2015 IT UB20152448
(43) Date of publication of application: 16.05.2018
(73) Proprietor: Ferrari, Gino, 42015 Correggio (Reggio Emilia) (IT); Maioli, Franco, 42015 Correggio (Reggio Emilia) (IT)
(72) Inventor: Ferrari, Gino, 42015 Correggio (Reggio Emilia) (IT); Maioli, Franco, 42015 Correggio (Reggio Emilia) (IT)
(74) Representative: Bergamini, Silvio
(86) International application number: PCT/IB2016/054075
(87) International publication number: WO 2017/009749

(56) References cited:
- EP-A1- 2 174 807
- EP-A1- 2 599 648

## Description

### Field of the invention

The invention relates to a tire demounting device, which is generally designed to lift the bead of a tire and remove it from the tire fitting groove of a rim upon which it is mounted, without hitting the edge of the rim.

### Background art

Tire demounting devices have been long known to be used on tire changing machines to assist removal of tires from the rims upon which they are mounted.

These tire demounting devices are mounted at the lower end of a vertical rod, generally known as "pole", which is mounted at the free end of a horizontal arm that extends from the top of a column that raises from the base of a tire changing machine, to alternately pivot on a substantially horizontal plane perpendicular to the column.

These devices comprise a removing hook member, which is supported and moved between two operating positions by a specially designed support unit which connects it to the pole.

The two operating positions are namely a rest position, in which the hook member is inoperative and maintained in a retracted position relative to a wheel that has been previously secured to a known wheel locking device, with which a tire changing machine is typically equipped, and a work position in which the hook member, and namely the hook and a portion of its rod are tightly introduced between the bead of a tire that has been previously deflated and secured to the wheel lock, and the edge of the rim upon which it is mounted.

For example, patent WO2010/026539 discloses a "Device for fitting and removing tyres" that comprises a support having a connecting portion designed to be associated with a movable arm of a tire changing machine.

A first element extends from the support and is designed to be placed at one section of the edge of a wheel rim.

The patent also provides a substantially elongate guide element, disposed orthogonal to the first element, a gripper tool which is associated to the support and is designed to be inserted between the tire and the rim, and has a curved end, and is movable between a retracted position in which the end section is arranged proximate to the first element and a removal position in which the gripper tool extends from the first element toward the wheel.

Patent EP 2233325 discloses a *"Machine for fitting and removing the wheel tyres of vehicle"* which comprises: a base frame supporting a self-centering rotating device, an operating head that is designed to be associated with the base frame and to be placed near a retaining flange; a guide nut for guiding a bead; a guide wing for guiding the bead; a gripper tool for gripping the bead, which is arranged between the guide nut and the guide wing and has a specially shaped end with a substantially oblique profile, suitable for cooperating with the guide nut for guiding the bead; drive members for moving the gripper tool between a first bead guiding position and a second bead gripping position.

The drive members (10) are able to move the gripper tool along two different paths in the first and second configurations.

Patent EP 1593533 discloses a *"Automatic device for mounting and dismounting tires".*

This patent teaches a device that is associated with a tire changing machine and has a lower base with a self-centering apparatus arranged thereon for supporting and locking wheels, a vertical pole associated with said base, a horizontal support arm associated with the pole.

The device comprises a movable shaft that can vertically slide in a conduit, to thereby horizontally slide on said arm, a four-bar linkage composed of the tire removing tool, a pair of opposed connecting rods and a body fixed to the lower end of the movable shaft, as well as an operating lever articulated to the four-bar linkage and adapted to deform it and transfer a roto-translational motion to the tool that moves from a holding position to a position in which a tire bead is removed from the rim.

The Chinese patent CN202935102 discloses a *"Tire dismounting device"* which uses the movement of a hook member having an upper part and a lower part; the upper part is hinged to an actuating rod, the other side of the latter being hinged to the lower end of a curved rotation arm.

The upper part of the curved rotation arm is hinged to the output end of a device for actuating the tire removing hook member; the upper part of the connecting portion is hinged to the lower end of a flange; the lower part of the connection portion is hinged to the upper end of a second connecting rod, and the lower end of the latter is hinged to the lower end of the flange.

In short, all the removal tools, i.e. the hook members, of these devices are movably supported to move from the rest position to the work position and vice versa, without hitting the edge of the rim, to avoid the risk of damaging the latter.

Typically, the movement of the hook member is a roto-translational movement toward and from a point between the tire bead and the edge of the rim in which it has to be inserted, to pass over the edge of the rim without touching it, and reach a position in which the hook member can engage the inner edge of the sidewall of a tire to be removed from its rim, as it is moved away from it and to lift it above the edge of the rim.

Typically, these devices have a bearing element at one point of the rim, which is made of non-abrasive materials and acts as a fulcrum for the action of the removing hook member.

Typically, the hook member has an elongate body forming a hook at one end and a hinge at an opposite end, for the concurrent end of a connecting rod to be hinged thereto, with the shaft of a hydraulic actuator mounted to the pole, parallel thereto.

The actuator alternately pushes and pulls the connecting rod, thereby causing the hook member to move.

The latter is supported by a four-bar linkage structure, with the elongate body forming one of the sides thereof, so that the hook member will move toward or away from the selected working point, with a roto-translational movement that allows it to fit between the tire bead and the edge of the rim, by rotating around the latter without contacting it, to engage the inner edge of the tire and remove it from the rim, still with following a roto-translational path.

The fourth side of the four-bar linkage structure is defined by a pair of vertical and parallel plates, with the four-bar linkage structure being housed therebetween, and with the non-abrasive bearing element being formed at the base thereof.

From EP21744807 an "Operating head for removing and fitting wheels tires for vehicles" according to the features of the preamble of claim 1 is known.

The operating head comprises support means associable with the arm of a tire changing machine, a removal tool having a substantially hook-shaped free extremity associated with the support means and moving between a fastening-on position of a section of the bead of a tire of a wheel fixed on the tire changing machine and a position of extraction of the bead section from the rim of the wheel, and actuator means supported by the support means and associated with the tool, in which the actuator means are suitable for moving the tool between the fastening-on position and the extraction position.

From EP2599648 an "Operating head for removing and fitting tires on rims of vehicles" is known.

The operating head comprises support means associable with a tire changing machine, a reference element associated with the supporting means and positionable in the proximity of a section of the edge of the rim of a wheel fixed on the tire changing machine, during the removal operation of a tire from the rim, a removal tool having a free extremity substantially hook-shaped, associated with the supporting means and movable between a fastening position, wherein the tool extends from the supporting means beyond the reference element to fit between the edge of the rim and the tire and to position the free extremity below the bead of a tire, and an extraction position, wherein the free extremity is arranged in correspondence to the reference element to extract the bead of the tire.

This prior art suffers from certain drawbacks.

A first drawback is that four-bar linkage structures have a complex actuating structure, as they require the lengths of the connecting rods to be accurately sized and the hinge points between parts to be positioned with the same accuracy, for the hook member to follow its proper roto-translational path.

A second drawback is that, with time, the stresses exerted on the hook member and the four-bar linkage structure, both for fitting between the tire and the rim and for removing the tire therefrom, create clearances at the hinge points which tend to increase with time and to progressively affect the accuracy of the movement path of the hook member.

For this reason, and for the reason that, during operation, the hook member is required to move very close to the edge of the rim, any minor offset from the optimal path caused by these clearances may cause collisions during movements, whereby even the use of a complex and expensive four-bar linkage structure will be of no use in preventing damages to the rims.

### Disclosure of the invention

The object of the invention is to improve the prior art.

Another object of the invention is to provide a tire demounting device that has a simplified structure as compared with those of the prior art, and is thus less expensive and more resistant to stresses as compared with prior art tire demounting devices.

In one aspect the invention relates to a tire demounting device as defined by the features of claim 1.

The invention affords the following advantages:
- quick removal of tires from rims, without the risk of impacting and contacting the latter;
- reduced number of parts, which makes the tire demounting device much simpler and less expensive than prior art tire demounting devices;
- considerable reduced clearances between the parts of the tire demounting device.

### Brief description of the drawings

Further characteristics and advantages of the invention will be more apparent from the detailed description of a preferred, non-exclusive embodiment of a tire demounting device, which is shown as non-limiting example in the annexed drawings, in which:
FIG. 1 is a broken view of a part of a tire changing machine equipped with the tire demounting device of the invention;
FIGS. 2 to 5 are schematic lateral views showing the operating steps of the tire demounting device of the invention;
FIGS. 2a to 5a show the position of a hook member of the tire demounting device of the invention in the respective operating steps of Figures 2 to 5;
FIG. 6 is a front view of the tire demounting device of the invention, in an inserted position.

### Detailed description of a preferred embodiment

Referring to the above mentioned figures, numeral 1 designates a vertical column of a conventional tire changing machine.

Numeral 2 designates a horizontal arm which is rotatingly articulated to the column 1 as is known by the skilled person.

The arm 2 has a free end 2a facing away from the column 1 and outwards, having a vertical sleeve 3 associated therewith, for a work tool-carrying rod 4 to coaxially and controllably slide therein.

A pneumatic cylinder (not shown) is associated with the rod 4, and has its shaft 5 mounted to slide relative to the rod 4, e.g. within the rod 4.

The latter has a longitudinal slot 6 in which a block 7 is slidingly guided, which block is rigidly joined to the shaft 5, so that it can be moved therewith.

Two parallel plates 8, here extending vertically, are attached to the lower end of the rod 4, and have a gap therebetween for a hook member 9 to be received therein, and move along a roto-translational path between an inserted position and a removal position.

The skilled person will understand that the term "inserted position" will designate a movement and a series of positions in which the hook is progressively fitted between the bead of a wheel tire and the edge "B" of the rim "C" upon which the tire is mounted, whereas the term "removal position" designates a movement and a position in which the hook member is progressively removed from the inserted position.

The hook member 9 has a elongate body which is slightly bent to form a knee 11 facing away from the rod 4, and has one end designed to be the lower end, i.e. the end facing the rim "C", that forms a hook 12 and, one opposite end that has a connection point 13, here a hinge having a transverse axis.

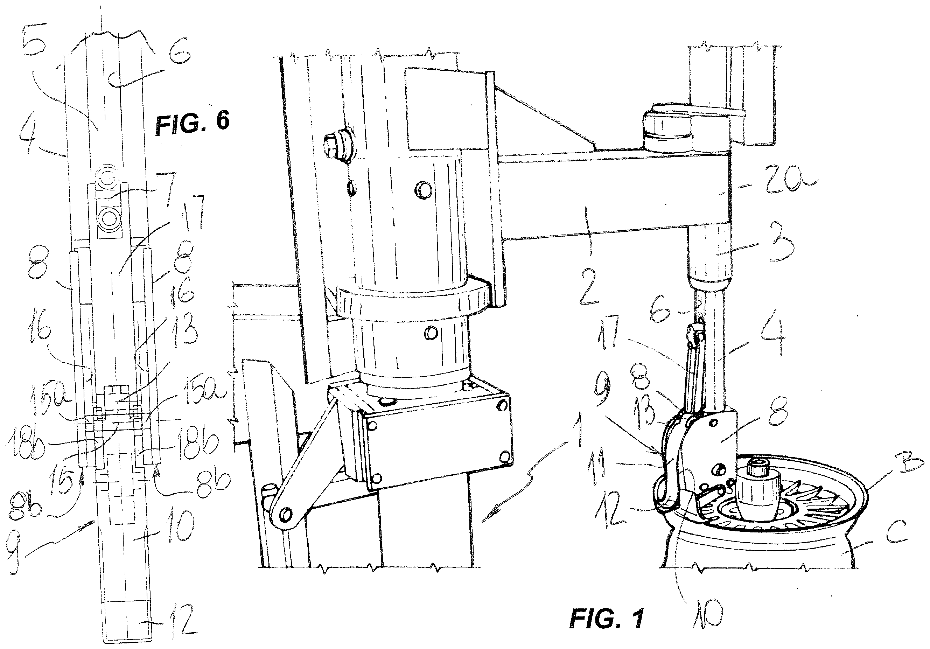

Proximate to the connection point 13, the hook member 9 has a short extension 14, extending in cantilever fashion toward the rod 4 and supporting, at its free end, a transverse pin 15 with its opposite ends projecting out by respective sections 15a (see Figure 6) relative to the body 10 of the hook member 9.

These ends 15a of the transverse pin 15 are guidingly engaged in two hollow tracks 16 formed to extend parallel to each other in the respective inner faces of the plates 8, and having arched profiles, with a first section "T1" having a first bend radius, and a second section "T1" having a second bend radius differing from the first bend radius, namely the first bend radius of the first section "T1" facing the rod 4 being greater than the second bend radius of the second section "T2" facing away from the rod 4.

The skilled person will nevertheless appreciate that the first section "T1" and the second section "T2" are seamlessly connected, to assist the sliding movement of the ends 15a.

A coupling rod 17 is interposed between the block 7 and the connection point 13, for transferring motion from the shaft 5 to the hook member 9.

Between the substantially middle area of the elongate body 10 and the lower areas of the plates 8, i.e. those facing the rim "C" and referenced 8a, the homologous ends 18a of a pair of connecting rods 18 are hinged, the latter having their opposite homologous ends hinged to the elongate body 19 at the knee 11, on each side of the latter, and can rotate about the ends 18a following a circular arc path.

The plates 8 define respective lower sides 8b, which are designed to rest on the rim "C2" during the steps in which a bead of a tire with the edge "B" is being removed therefrom.

The operation of the tire demounting device is as follows: when a tire is to be removed from the rim "C" upon which it is mounted, the operator places the wheel on a self-centering device of a tire changing machine, i.e. on the rotating platform upon which the wheels are laid, once they have been deflated and debeaded, and are temporarily secured using fixation members that act upon the rim "C" thereby holding them in a horizontal or substantially horizontal position.

Once the wheel has been secured, the horizontal arm 2 of the tire changing machine is placed in such a position that the hook member 9 will be located at an insertion point between the tire bead and the edge "B" of the rim "C".

At this time, the hook member 9 is held in a lifted position relative to the rim "C".

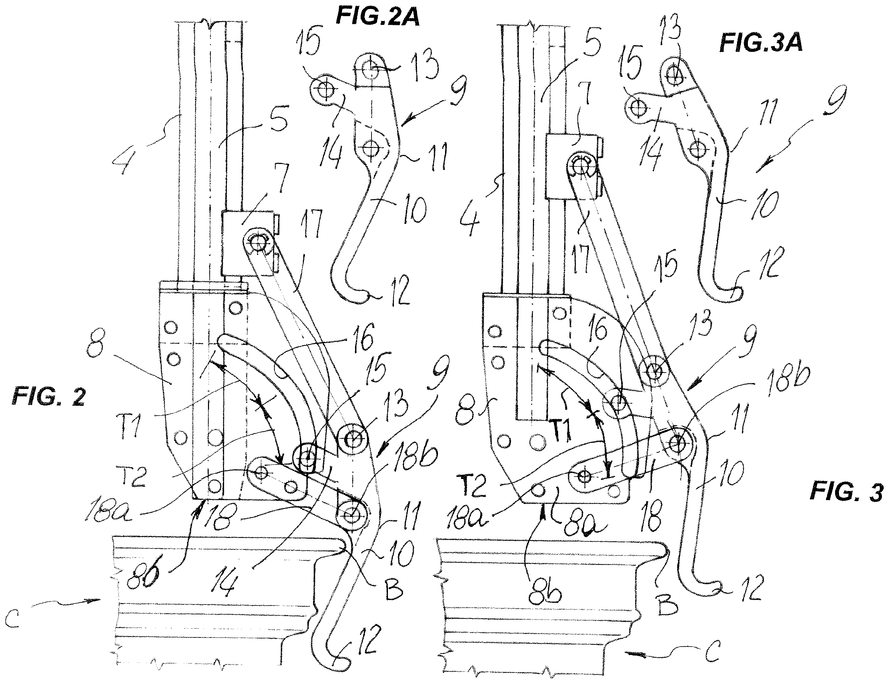

The rod 4 is progressively lowered until the lower sides 8b of the plates 8 contact the rim "C", as shown in Figures 2-5.

Then, the pneumatic cylinder is actuated and drives the shaft 5 to slide it toward the rim "C" relative to the rod 4, which remains in the previously established position.

The sliding movement of the shaft 5 actuates, through the block 7 and the connecting rod 17, the displacement of hook member 9 toward the rim "C".

This displacement imparts a roto-translational movement to the hook member 9, allowing the latter to pass over the edge "B" of the rim "C" without touching it and to introduce the hook 12 for a predetermined section between the latter and the inner bead of the tire.

The roto-translational movement of the hook member 9 is obtained due to the combined movement of the elongate body 10 which is simultaneously guided by the sliding movement of the ends 15a of the pin 15 in the tracks 16, namely along the sections "T1" and "T2" thereof, and by the rotation of the connecting rod 18 interposed between the elongate body 10 of the hook member 9 and the plates 8.

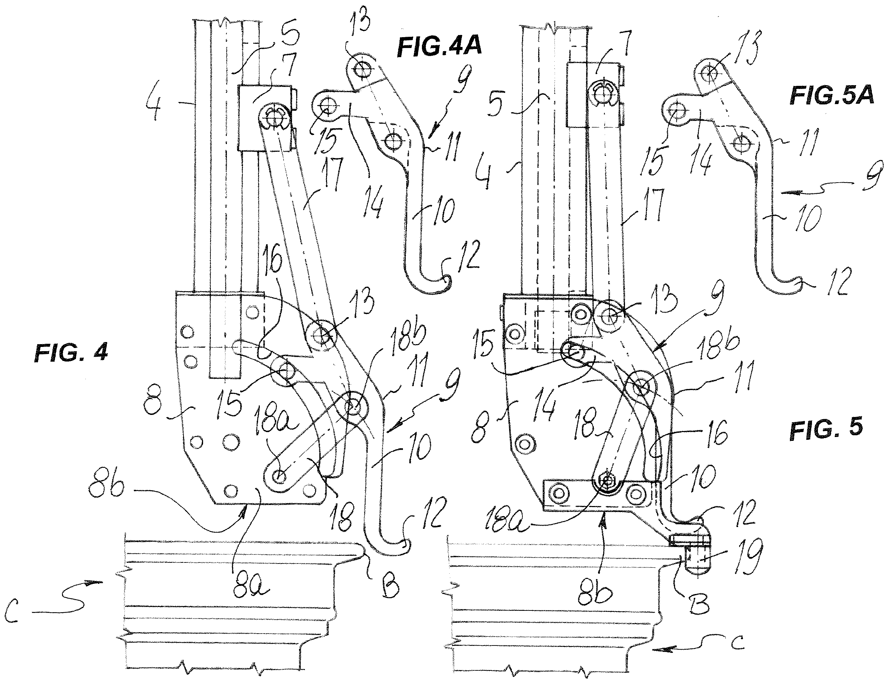

In other words, the combination of the paths of the ends 15a of the pin 15 in the two sections "T1" and "T2" of the connecting rod 18 create a pair of forces, schematically referenced F1 and F2 in Figure 5, which act upon the hinge points and impart a rotational movement to the elongate body 10 as a translational movement is imparted to the shaft 5.

The sum of these movements is the roto-translational movement that allows the hook member 8 to automatically and accurately introduce its hook 12 between the tire and the edge "B".

Once the hook 12 has been fully introduced, by passing over the inner edge of the tire bead, i.e. its side wall, it is ready to engage the latter during a subsequent removal step.

For the removal step, the cylinder pulls the shaft 5 upwards and the hook 12 engages the inner edge of the side wall of the tire and progressively removes it from the rim "C" by causing it to pass over the edge "B" of the latter.

Again, in this removal step, the elongate body 10 of the hook member 9 follows a roto-translational path that prevents any contact thereof with the edge "B", thereby protecting the integrity of the rim "C".

Figures 2a to 5a clearly show the position of the elongate body 10 in both introduction and removal steps.

Once a section of the tire bead has been lifted and removed from the rim "C", the operator may introduce a conventional demounting tool, referenced 19 in Figure 5, into this section and, by rotating the self-centering device, he may remove the entire bead of the tire from the rim "C" upon which it is mounted.

The invention has been found to fulfill the intended objects.

The invention so conceived is susceptible to changes and variants within the scope of the appended claims.

In its practical implementation, any material, shape and size may be used as needed, without departure from the scope of the invention as defined by the following claims.

## Claims

1. A tire demounting device, particularly for tire changing machines, comprising:
- An hook (9) having an oblong body (10) shaping a lower hook-shaped end (12) and having a joint point (13) at an opposing end;
- A couple of parallel plates (8) between which said hook (9) is movably fitted along a roto-translation trajectory;
- Fastening means of said plates to a support element (4);
- Moving means (5, 17) of said oblong body (10) between an inserted position, wherein it is interposed between the bead of a tire and the edge (B) of a rim (C) and an extracted position wherein it extracts said tire from the rim (C), that are connected with said joint point (13);
- A connecting rod member (18) having one end (18b) hinged to said oblong body (10) and an opposing end (18a) hinged to said plates (8), so as to rotate parallel to the latter along a circular arc trajectory;
- said oblong body (10) comprising at least a pin (15) transversally and perpendicularly supported to said plates (8) and said plates (8) comprising at least an outlined path (16) to guide said pin (15), **characterized in that** said oblong body (10) comprises a support arm (14) solidably extending toward said path (16) and to a free end of which said pin (15) is associated.

2. A device as claimed in claim 1, wherein said moving means comprise:
- An actuator associated with said support element and having a reciprocating rod (5);
- A connecting element (17) interposed between said rod (5) and said joint point (13).

3. A device as claimed in claim 1, wherein said path (16) is outlined as a convex arc facing said oblong body (10) and having a first segment (T1) having a first bending radius and a second segment (T2) having a second bending radius different from said first bending radius.

4. A device a claimed in anyone of preceding claims, wherein said support element comprises a work tools support stem (4) of a tire changing machine.

5. A device as claimed in claim 2, wherein said movable rod (5) is guided by guiding means (6) along said support element (4).

6. A device as claimed in claim 1, wherein said path comprises at least a groove (16) obtained in at least one inner face of one of said parallel plates (8).

## Patentansprüche

1. Reifendemontiervorrichtung, insbesondere für Reifenwechselmaschinen, umfassend:
- einen Haken (9), der einen länglichen Körper (10) aufweist, der ein unteres hakenförmiges Ende (12) formt und einen Gelenkpunkt (13) an einem entgegengesetzten Ende aufweist;
- ein Paar paralleler Platten (8), zwischen dem der Haken (9) beweglich entlang einer Rototranslationsbahn montiert ist;
- Befestigungsmittel der Platten an einem Stützelement (4);
- Bewegungsmittel (5, 17) des länglichen Körpers (10) zwischen einer eingeschobenen Position, wobei es zwischen dem Wulst eines Reifens und der Kante (B) einer Felge (C) eingefügt ist, und einer herausgezogenen Position, wobei es den Reifen von der Felge (C) herauszieht, die mit dem Gelenkpunkt (13) verbunden sind;
- ein Verbindungsstangenteil (18), das ein Ende (18b), das an den länglichen Körper (10) angelenkt ist, und ein entgegengesetztes Ende (18a) aufweist, das an die Platten (8) angelenkt ist, um parallel zu den letzteren entlang einer Kreisbogenbahn zu rotieren;
- wobei der längliche Körper (10) mindestens einen Stift (15) umfasst, der transversal und senkrecht zu den Platten (8) gestützt ist und wobei die Platten (8) mindestens einen beschriebenen Pfad (16) umfassen, um den Stift (15) zu führen, **dadurch gekennzeichnet, dass** der längliche Körper (10) einen Stützarm (14) umfasst, der sich fest zum Pfad (16) und zu einem freien Ende hin erstreckt, mit dem der Stift (15) assoziiert ist.

2. Vorrichtung nach Anspruch 1, wobei die Bewegungsmittel umfassen:
- einen Aktuator, der mit dem Stützelement assoziiert ist und eine hin- und hergehende Stange (5) aufweist;
- ein Verbindungselement (17), das zwischen der Stange (5) und dem Gelenkpunkt (13) eingefügt ist.

3. Vorrichtung nach Anspruch 1, wobei der Pfad (16) als ein konvexer Bogen beschrieben ist, der dem länglichen Körper (10) zugewandt ist und ein erstes Segment (T1), das einen ersten Krümmungsradius aufweist, und ein zweites Segment (T2) aufweist, das einen zweiten Krümmungsradius aufweist, der von dem ersten Krümmungsradius verschieden ist.

4. Vorrichtung nach einem der vorstehenden Ansprüche, wobei das Stützelement einen Arbeitswerkzeugstützstiel (4) einer Reifenwechselmaschine umfasst.

5. Vorrichtung nach Anspruch 2, wobei die bewegliche Stange (5) durch Führungsmittel (6) entlang des Stützelements (4) geführt wird.

6. Vorrichtung nach Anspruch 1, wobei der Pfad mindestens eine Nut (16) umfasst, die in mindestens einer Innenseite einer der parallelen Platten (8) erhalten wird.

## Revendications

1. Dispositif de démontage de pneu, en particulier pour machines de changement de pneu, comprenant :
- un crochet (9) ayant un corps oblong (10) formant une extrémité inférieure en forme de crochet (12) et ayant un point d'articulation (13) à une extrémité opposée ;
- un couple de plaques parallèles (8) entre lesquelles chaque crochet (9) est ajusté de manière mobile le long d'une trajectoire de roto-translation ;
- des moyens de fixation desdites plaques à un élément de support (4) ;
- des moyens mobiles (5, 17) dudit corps oblong (10) entre une position insérée, dans laquelle il est interposé entre le bourrelet d'un pneu et le bord (B) d'un rebord (C) et une position extraite dans laquelle il extrait ledit pneu du rebord (C), qui sont reliés audit point d'articulation (13) ;
- un élément de tige de liaison (18) ayant une extrémité (18b) articulée sur ledit corps oblong (10) et une extrémité opposée (18a) articulée sur lesdites plaques (8), de façon à tourner parallèlement à ces dernières le long d'une trajectoire d'arc circulaire ;
- ledit corps oblong (10) comprenant au moins une broche (15) supportée transversalement et perpendiculairement sur lesdites plaques (8) et lesdites plaques (8) comprenant au moins un trajet défini (16) pour guider ladite broche (15), **caractérisé en ce que** ledit corps oblong (10) comprend un bras de support (14) s'étendant de manière solidaire vers ledit trajet (16) et à une extrémité libre duquel ladite broche (15) est associée.

2. Dispositif selon la revendication 1, dans lequel lesdits moyens mobiles comprennent :
- un actionneur associé audit élément de support et ayant une tige animée d'un mouvement de va-et-vient (5) ;
- un élément de liaison (17) interposé entre ladite tige (5) et ledit point d'articulation (13).

3. Dispositif selon la revendication 1, dans lequel ledit chemin (16) est défini en tant qu'arc convexe faisant face audit corps oblong (10) et ayant un premier segment (T1) ayant un premier rayon de courbure et un deuxième segment (T2) ayant un deuxième rayon de courbure différent dudit premier rayon de courbure.

4. Dispositif selon l'une quelconque des revendications précédente, dans lequel ledit élément de support comprend un tronc de support d'outils de travail (4) d'une machine de changement de pneu.

5. Dispositif selon la revendication 2, dans lequel ladite tige mobile (5) est guidée par des moyens de guidage (6) le long dudit élément de support (4).

6. Dispositif selon la revendication 1, dans lequel ledit chemin comprend au moins une rainure (16) obtenue dans au moins une face intérieure d'une desdites plaques parallèles (8).
